# FASCICULE DE BREVET EUROPEEN

(11) **EP 1 375 073 B1**
(45) Date de publication et mention de la délivrance du brevet: **06.10.2010**
(21) Numéro de dépôt: 03291473.1
(22) Date de dépôt: 18.06.2003
(51) Int. Cl.: B25B 29/02

(54) **Dispositif de tension pour mise en précontrainte d'une tige et procédé de tension associé**
Vorrichtung zum Spannen um einen Schaft unter Vorspannung zu bringen und hiermit verbundenes Verfahren
Tensioning device for pretensioning a rod and tensioning method

(30) Priorité: 20.06.2002 FR 0207654
(43) Date de publication de la demande: 02.01.2004
(73) Titulaire: Aktiebolaget SKF, 415 50 Göteborg (SE)
(72) Inventeur: Faus, José, 75011 Paris (FR); Monville, Jean-Michel, 78690 Les Essarts le Roi (FR)
(74) Mandataire: Dossmann, Gérard

(56) Documents cités:
- EP-A- 0 224 622
- GB-A- 2 201 745
- US-A- 3 008 362
- US-A- 3 494 592
- US-A- 3 995 828
- US-A- 4 433 828

## Description

La présente invention concerne un dispositif de tension d'une tige avant son blocage, par exemple à l'aide d'un écrou, notamment pour la mise en précontrainte des tiges filetées utilisées pour la fixation de pièces mécaniques entre elles.

La mise en tension de tiges de fixation peut se faire en appliquant un couple de serrage sur des écrous venant en appui axial sur les pièces à assembler. Cette méthode de serrage ne permet pas, à causes des frottements au niveau de la face de l'écrou en contact avec une pièce assemblée et au niveau des filets écrou/tige en correspondance, de contrôler avec précision l'effort axial de précontrainte de la tige. De plus, cette méthode de serrage introduit des contraintes résiduelles de torsion dans la tige filetée, ce qui conduit par précaution à utiliser des tiges filetées surdimensionnées. Par ailleurs, un tel serrage conduit le plus souvent à une détérioration plus ou moins importante d'une part des filets de l'écrou et de ceux de la tige filetée coopérant avec ces derniers pendant le serrage et d'autre part de la surface de la pièce contre laquelle l'écrou vient en appui pendant sa rotation lors du serrage.

Pour éviter ces inconvénients, on peut tendre axialement une tige filetée avant d'accoster un écrou de serrage sur une surface d'appui. L'écrou de serrage bloque la tige lorsque l'on relâche un effort de tension de la tige. La tige est précontrainte uniquement selon son axe.

Pour exercer une tension sur la tige, on peut utiliser un actionneur ou tendeur. Ainsi, après avoir procédé à la mise en place de l'écrou de serrage de l'assemblage sur l'extrémité de la tige à précontraindre, on vient coiffer l'extrémité de la tige ainsi que l'écrou avec l'actionneur. On visse ensuite un tirant sous la forme d'un écrou sous la forme d'un écrou de traction pour appliquer un effort de traction développé par l'actionneur. Enfin, pendant que la tige est maintenue en tension, on accoste l'écrou de l'assemblage pour le mettre en contact avec la pièce à assembler, et on relâche la tension exercée par l'actionneur sur la tige, cette dernière étant bloquée par l'écrou de l'assemblage.

Souvent, les assemblages mécaniques doivent être maintenus par plusieurs tiges filetées. La mise en oeuvre de tels dispositifs de traction nécessite, surtout quand le nombre de tiges filetées est important, de multiples vissages et dévissages des tirants qui rendent les opérations d'assemblage fastidieuses. De plus, les conditions de mise en oeuvre des dispositifs de traction peuvent être difficiles, ce qui rend plus éprouvant encore leur utilisation par un opérateur.

On connaît par le document GB 2 201 745 un dispositif de tension d'une tige filetée comprenant une paire de mâchoires mobiles radialement, et disposée dans un manchon conique. Un écrou à mâchoires est prévu pour le blocage de la tige en venant en appui sur un flasque. Un ensemble piston-cylindre est disposé axialement entre le manchon et l'écrou à mâchoires. Le piston est prévu pour pousser le manchon axialement du côté opposé à l'écrou. Un mouvement axial du manchon conique provoque un rapprochement radial des mâchoires de sorte qu'elles viennent en prise sur la tige filetée.

Ce dispositif nécessite de ménager une extrémité libre de tige filetée de longueur importante, correspondant à la longueur de l'écrou à mâchoires, augmentée de la longueur de l'ensemble piston cylindre et des mâchoires, afin de permettre que les mâchoires viennent en prise avec la tige filetée.

Par ailleurs, les mâchoires viennent en prise avec la tige filetée avec un mouvement combiné radial et axial lors de l'application d'un effort axial de tension. Il existe un risque que les sommets des filets de la tige filetée viennent en appui contre les sommets des filets des mâchoires et se détériorent.

En outre, les mâchoires ne viennent en prise sur la tige filetée que lorsqu'un effort axial de tension est appliqué. Une mauvaise coopération entre les mâchoires et la tige filetée ne sera pas détectée avant l'application d'un effort axial par le piston. Un opérateur doit pouvoir être assuré que chaque dispositif de tension est bien installé, et qu'un tirant pourra transmettre les efforts de façon satisfaisante, avant de commander la mise en tension d'un ensemble de tiges.

Dans certains dispositifs, des éléments sont fixés entre eux à l'aide d'un nombre important de tiges filetées et d'écrous. Les dispositifs de tension sont installés par des opérateurs, parfois dans des conditions difficiles, qui privent les opérateurs d'une mobilité de mouvement totale. Il est nécessaire de faciliter l'installation de chaque dispositif de tension.

La présente invention concerne un dispositif de tension pouvant être installé facilement par un opérateur, et assurant la bonne installation du dispositif de tension avant la mise en tension d'une tige filetée de fixation d'un assemblage mécanique.

L'invention concerne également un dispositif de tension permettant une installation facile et sa mise en oeuvre rapide, notamment pour faciliter l'application d'une tension de précontrainte simultanément sur un grand nombre de tiges filetées.

L'invention concerne également un dispositif de tension permettant de limiter une longueur d'une extrémité libre d'une tige filetée nécessaire à l'installation du dispositif de tension.

Un tel dispositif de tension d'une tige filetée comprend un actionneur apte à exercer un effort axial, un tirant de transmission d'un effort axial de l'actionneur vers une extrémité filetée de la tige, le tirant comprenant au moins deux mâchoires mobiles entre une position fermée dans laquelle le tirant est en prise avec une extrémité filetée d'une tige, et une position ouverte dans laquelle les mâchoires sont dégagées de la tige filetée. Selon un aspect de l'invention, le dispositif comprend un verrou mobile entre une position stable d'ouverture des mâchoires et une position stable de fermeture des mâchoires.

Le tirant comprenant des mâchoires mobiles entre une position fermée et une position ouverte permet de verrouiller rapidement le dispositif de traction de la tige filetée en s'affranchissant d'opération de vissage du tirant sur l'extrémité de la tige filetée, opération devant être effectuée manuellement et par conséquent coûteuse en temps. Le verrou peut être actionné axialement facilement et rapidement pour fermer ou ouvrir les mâchoires. Le verrou permet de maintenir les mâchoires dans une position ouverte ou dans une position fermée. Le verrou maintenant les mâchoires dans une position ouverte permet la mise en place du dispositif de serrage avant de positionner les mâchoires en prise avec une extrémité filetée d'une tige. Lors de l'installation du dispositif de tension, les mâchoires maintenues ouvertes n'interféreront pas avec le filetage de la tige, de sorte que le dispositif peut être installé facilement, sans effort résistant, ce qui est appréciable pour un opérateur. Pour assurer la fermeture des mâchoires, un opérateur devra simplement positionner le verrou axialement sans procéder à une quelconque rotation des mâchoires ou de l'actionneur. L'opérateur est assuré que les mâchoires sont en prise avec la tige. Cette opération se fait indépendamment de l'application d'un effort axial de tension de la tige.

Dans un mode de réalisation, le verrou comprend des surfaces d'écartement des mâchoires destinées à venir en appui sur des surfaces correspondantes des mâchoires, les surfaces d'écartement du verrou étant sensiblement perpendiculaires à une direction d'écartement des mâchoires. Des surfaces d'appui perpendiculaires à une direction de déplacement des mâchoires permettent d'éviter un déplacement du verrou lorsque les mâchoires sont sollicitées en position de fermeture, comme cela pourrait se produire avec des surfaces inclinées. La position d'ouverture des mâchoires est stable. Avantageusement, les mâchoires sont mobiles essentiellement selon une direction radiale.

Dans un mode de réalisation, le verrou comprend un manchon coulissant entre les mâchoires et muni de surépaisseurs d'écartement des mâchoires sur un segment axial du manchon. Lorsque le verrou est coulissé de façon que le segment pourvu des surépaisseurs soit introduit entre les mâchoires en les écartant, les mâchoires se trouvent en position ouverte permettant l'insertion de l'extrémité d'une tige filetée entre les mâchoires. Lorsque le verrou est coulissé de façon que le segment pourvu surépaisseurs soit dégagé d'entre les mâchoires, les mâchoires peuvent être amenées en position fermée dans laquelle elles sont en prise avec l'extrémité filetée d'une tige.

Dans un mode de réalisation, les mâchoires sont sollicitées en position fermée par un élément élastique. Lorsque le verrou est placé en position de fermeture, un mouvement de fermeture des mâchoires n'est plus empêché par le verrou. Ce mouvement de fermeture est provoqué par l'élément élastique. Avec une telle conception, les mâchoires tendent à revenir en position fermée, ce qui assure la fiabilité du dispositif de traction en évitant que les mâchoires ne restent bloquées en position ouverte. L'élément élastique peut être constitué de ressorts disposés entre les mâchoires ou d'un anneau élastique entourant les mâchoires, et tendant, les uns ou l'autre, à rapprocher les mâchoires.

Avantageusement, les mâchoires sont montés flottantes axialement à l'aide de ressorts. Une liberté de déplacement axial des mâchoires permet une adaptation de la position des mâchoires de façon qu'une portion de traction filetée des mâchoires coopère convenablement avec le filetage de la tige

Dans un mode de réalisation, l'actionneur comprend un organe mobile pourvu d'une portion d'accrochage présentant une surface inclinée de contact avec les mâchoires pourvue de surfaces correspondantes. Ainsi, l'organe mobile peut exercer un effort supplémentaire de serrage des mâchoires lorsqu'un effort axial de tension est exercé. L'effort de serrage augmente avec l'effort tension.

Avantageusement, la portion d'accrochage de l'organe mobile est décalée axialement par rapport à une portion de reprise d'effort en étant destinée à coopérer avec une portion de traction des mâchoires située à une extrémité des mâchoires. La portion d'accrochage décalée permet d'agir sur une portion de traction du tirant en prise avec la tige filetée à proximité d'un écrou de serrage. On limite la longueur d'une extrémité libre de la tige filetée. Par conséquent, la tige filetée étant plus courte, on limite la durée d'une opération de vissage d'un écrou de serrage ou blocage sur l'extrémité de la tige filetée. Par ailleurs on évite une déformation axiale du tirant. La portion d'accrochage décalée permet également de préserver un espace intérieur du piston pour permettre un écartement radial des mâchoires.

Dans un mode de réalisation, le tirant comprend au moins un guide d'écartement radial des mâchoires coulissant simultanément dans des perçages ménagés dans deux mâchoires.

L'invention concerne également un ensemble de tension de tiges filetées, caractérisé par le fait qu'il comprend une plaque de support portant au moins deux dispositifs de tension selon un aspect de l'invention, et une plaque de verrouillage pour agir simultanément sur l'ensemble des verrous des dispositifs de tension.

L'invention concerne également un procédé de mise en tension d'une tige filetée, dans lequel on maintient des mâchoires d'un tirant écartées à l'aide d'un verrou, on libère les mâchoires par une action sur le verrou de façon qu'elles se ferment sur une extrémité de la tige, puis on exerce un effort axial de tension sur la tige filetée à l'aide d'un actionneur agissant sur le tirant.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue en coupe axiale d'un dispositif de tension selon l'invention, dans une position ouverte des mâchoires ;
- la figure 2 est une vue en coupe axiale d'un dispositif de tension selon la figure 1, dans une position fermée des mâchoires ;
- la figure 3 est une vue en coupe radiale selon III-III du dispositif de tension selon la figure 2 ;
- la figure 4 est une vue en coupe axiale du dispositif de tension selon la figure 2, lors de l'application d'un effort de traction axiale sur une extrémité d'une tige filetée ; et
- la figure 5 est une vue de dessus schématique d'un ensemble de tension comprenant une pluralité de dispositifs de tension selon la figure 1.

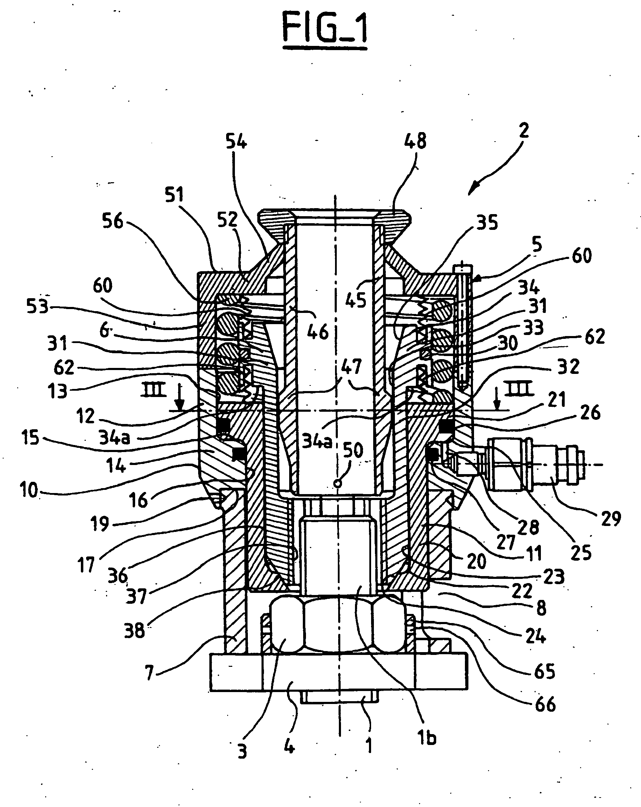

Sur la figure 1, une tige filetée 1 est destinée à être précontrainte axialement à l'aide d'un dispositif de tension référencé 2 dans son ensemble et en étant par la suite bloquée par un écrou 3 venant en appui sur une surface d'une structure à serrer, représenté ici sous la forme d'une plaque 4.

Le dispositif de tension 2 comprend un actionneur 5 apte à exercer un effort axial de traction transmis à une extrémité 1b de la tige filetée 1 par l'intermédiaire d'un tirant 6. L'actionneur 5 vient en appui sur la plaque 4 par l'intermédiaire d'une jupe tubulaire 7 entourant l'extrémité de la tige 1 et munie d'une ouverture 8 pour l'accostage de l'écrou 3 contre la plaque 4.

Une clé d'accostage 64 est prévue sur l'écrou 3 pour pouvoir pivoter ce dernier pour l'accoster contre la plaque 4 à travers l'ouverture 8 lorsque le dispositif de tension coiffe l'exrtémité de la tige filetée. La clé d'accostage 64 entoure l'écrou 3 et comprend des surfaces intérieures en concordance avec les surfaces extérieures de l'écrou 3. De façon classique, la clé 64 comprend un trou central hexagonal. La clé 64 comprend encore des trous axiaux situés axialement à mi-hauteur et prévues pour l'insertion d'un manche non représenté pour provoquée une rotation de la clé 64, et donc de l'écrou 3.

L'actionneur 5 comprend un cylindre 10 et un piston 11 coulissant dans le cylindre 10 et formant avec le cylindre 10 une chambre annulaire. Le cylindre 10 présente une forme générale de coupelle annulaire comprenant une portion axiale 12 présentant un alésage 13, et une embase 14 sous la forme d'une portion radiale s'étendant vers l'intérieur à partir d'une extrémité de la portion axiale 12, en formant un épaulement radial 15 dirigé du côté de l'extrémité opposée de la portion axiale 12. L'embase 14 présente un alésage 16.

Du côté opposé à l'épaulement 15, l'embase 14 comprend une surface radiale d'appui 17 en contact avec une extrémité de la jupe d'appui 7 opposée à la plaque 4. Le cylindre 10 comprend une nervure axiale circonférentielle de centrage 19 s'étendant à partir d'une zone de plus grand diamètre de l'embase 14 du côté opposé à la portion axiale 12, et entourant l'extrémité de la jupe d'appui 7 pour maintenir radialement le cylindre 10 sur la jupe 7 en centrant le cylindre 10 sur la jupe 7.

Le piston 11 de forme générale annulaire comprend une portion tubulaire 20, une collerette 21 s'étendant radialement vers l'extérieur à partir d'une extrémité de la portion tubulaire 20, et une portion radiale d'accrochage 22 s'étendant radialement vers l'intérieur à partir d'une extrémité de la portion tubulaire 20 opposée à la collerette 21. La portion tubulaire 20 présente un alésage 23. Le bord intérieur libre de la portion d'accrochage 22 présente une surface tronconique 24 orientée radialement vers l'intérieur et allant en s'évasant du côté de la collerette 21.

La portion tubulaire 20 est ajustée dans l'alésage 16 de l'embase 14 du cylindre 10. La collerette 21 est ajustée sur la portée cylindrique intérieure 13 de la portion axiale cylindrique 12 du cylindre 10. Une chambre annulaire 25 est formée axialement entre la collerette 21 du piston 11 et la surface radiale 15 de l'embase 14 du cylindre 10, et radialement entre la portion axiale 12 du cylindre 10 et la portion tubulaire 20 du piston 11. La collerette 21 comprend sur une surface extérieure une rainure annulaire dans laquelle est logé un joint d'étanchéité 26 en contact de frottement avec l'alésage 13 de la portion axiale 12 du cylindre 10. L'embase 14 comprend une rainure annulaire formée sur son alésage 16 et dans laquelle est disposé un joint d'étanchéité 27 en contact de frottement avec la surface extérieure de la portion cylindrique 20 du piston 11. Les joints 27 et 26 assurent l'étanchéité de la chambre annulaire 25.

L'actionneur 5 comprend des moyens d'alimentation en fluide sous pression en partie représentés sur la figure 1. Une amenée 28 est formée dans l'embase 14 du cylindre 10 en débouchant d'un côté dans la chambre annulaire 25 au niveau de la surface radiale 15, et à l'opposé vers l'extérieur. Un raccord hydraulique 29 est fixé à l'extérieur du cylindre 10 pour alimenter l'amenée 28 en fluide sous pression.

Le tirant 6 comprend deux mâchoires identiques 31 mobiles sollicitées en position fermée par un élément élastique sous la forme d'un anneau ouvert 30.

Une mâchoire 31 se présente sous la forme d'une portion angulaire d'une pièce de révolution délimitée par des plans radiaux, ladite pièce de révolution comprenant une portion intermédiaire tubulaire 32 présentant une surface intérieure cylindrique 33, une portion de guidage et de reprise d'effort 34 située à une extrémité de la portion tubulaire 32, de diamètre extérieur supérieur au diamètre de la portion tubulaire 32, et formant un épaulement radial 34a entre la surface extérieure de la portion de guidage et de reprise d'effort 34 et la surface extérieure de la portion intermédiaire tubulaire 32, la portion de guidage présentant en outre une surface intérieure évasée 35 prolongeant la surface intérieure 33 de la portion intermédiaire 32 en s'évasant du côté opposé à la portion intermédiaire 32, un portion, et une portion de traction 36 située du côté de la portion intermédiaire 32 opposé à la portion de guidage 34, et présentant une surface intérieure filetée 37 et à son extrémité libre une surface extérieure tronconique 38 formée par un amincissement progressif de l'épaisseur radiale de la portion de traction 36 en se dirigeant du côté opposé à la portion intermédiaire 32.

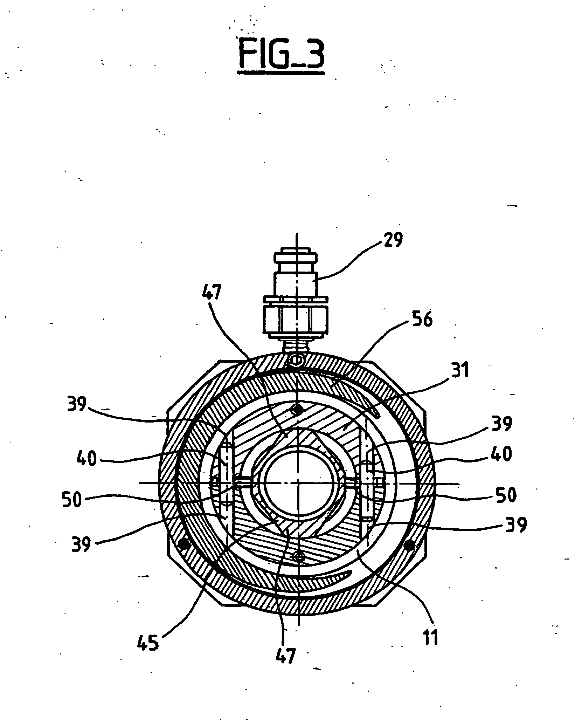

Le tirant 6 comprend ici deux mâchoires 31 sensiblement semi-cylindriques, c'est-à-dire occupant un secteur angulaire sensiblement égal à 180°, en étant légèrement inférieur. Les mâchoires 31 sont situées de part et d'autre d'un plan radial de séparation. Comme on peut mieux le voir sur la figure 3, les mâchoires 31 sont écartées selon une direction radiale perpendiculaire au plan de séparation, de façon qu'il existe un espace axial entre des bords latéraux adjacents des mâchoires 31. Les portions de guidage 34 des mâchoires 31 sont pourvues de perçages 39 parallèles à la direction d'écartement des mâchoires 31 et formés dans l'épaisseur des portions de guidage 34. Un perçage 39 d'une mâchoire 31 vient en regard d'un perçage 39 de l'autre mâchoire 31. Des guides 40, sous la forme de pions ou de chevilles, sont montés coulissants simultanément dans un perçage d'une mâchoire 31 et dans le perçage correspondant de l'autre mâchoire 31, en préservant un passage axial entre les mâchoires 31.

En revenant à la figure 1, l'anneau élastique ouvert 30 entoure les mâchoires 31 en étant déformé dans le sens d'une ouverture. L'anneau élastique 30 exerce un effort radial de serrage des mâchoires 31. Plus précisément, l'anneau élastique 30 est logé dans des portions de rainure annulaire ménagée dans les surfaces extérieures des portions de guidage 34 des mâchoires 31.

Un verrou 45 est prévu pour être inséré dans le passage axial entre les mâchoires 31. Le verrou 45 comprend un manchon 46 pourvu sur un segment intermédiaire axial de surépaisseurs sous la forme de lobes 47 en saillie radialement vers l'extérieur. Un lobe 47 comprend une portion centrale de blocage présentant une surface extérieure orientée du côté opposé au manchon 46 en étant sensiblement parallèle à l'axe du verrou 45, c'est-à-dire perpendiculaire à une direction radiale, et des portions latérales de guidage inclinées, situées axialement de part et d'autre de la portion centrale. Les lobes 47 sont ici au nombre de deux et diamétralement opposés.

Le verrou 45 comprend une butée 48 vissée à une extrémité du manchon 46. Le verrou 45 comprend également deux tétons 50 diamétralement opposés, en saillie radiale vers l'extérieur à partir de l'extrémité du manchon 46 opposée à la butée 48, et alignés selon une direction perpendiculaire à la direction d'alignement des lobes 47. Du côté opposé à la butée 48, une portion d'extrémité du manchon 46 dépourvue de lobes 47 présente une portée cylindrique extérieure.

Le dispositif de tension 2 comprend un capot 51 de forme générale annulaire comportant une portion radiale 52 et une portion axiale cylindrique 53 s'étendant axialement à partir de la zone de plus grand diamètre de la portion radiale 52. Le capot 51 comprend une portion centrale 54 s'étendant à partir du bord intérieur de la portion radiale 52, radialement vers l'intérieur et du côté opposé à la portion axiale 53. La portion centrale 54 présente une ouverture.

Le tirant 6 est inséré dans le piston 11 de l'actionneur de tension 5, la portion de guidage 34 se situant axialement entre le piston 11 et la portion radiale 52 du capot 51. Le capot 51 est fixé sur le cylindre 10 du côté opposé à l'embase 14. Un ressort de rappel 56 est disposé entre la paroi radiale 52 du capot 51 et la collerette 21 du piston 20. Le verrou 45 est ajusté dans la partie centrale 54 du capot 51 et peut coulisser axialement.

Le tirant 6 est monté suspendu ou flottant axialement à l'aide de ressorts de suspension. Des premiers ressorts suspension 60 sont disposés axialement entre la paroi radiale 52 du capot 51 et les portions de guidage 34 des mâchoires 31. Des seconds ressorts de suspension 62 sont disposés axialement entre la collerette 21 du piston 11 et les portions de guidage 34 des mâchoires 31.

Dans la position illustrée par la figure 1, le dispositif de mise en tension 2 est positionné contre la plaque 4 de façon que la jupe 7 entoure la tige filetée 1. L'écrou 3 est vissé sur la tige 1 en étant accosté contre la plaque 4. Le piston 11 de l'actionneur de tension est rentré, c'est-à-dire que la collerette 21 du piston est en contact avec l'embase 14 du cylindre 10, de sorte que le volume de la chambre annulaire 25 est minimum. La portion d'accrochage 22 du piston 11 se situe axialement à proximité de l'écrou 3, en entourant l'extrémité libre 1b de la tige filetée 1 de fixation de l'assemblage.

Le tirant 6 est inséré dans le piston 11, l'extrémité libre de la portion de traction 36 pourvue d'une surface extérieure tronconique 38 étant entourée par la portion d'accrochage du piston 11.

Le verrou 45 est déplacé en translation entre les mâchoires 31 de façon que les parties centrales des lobes 47 soient insérées entre les portions intermédiaires des mâchoires 31, la butée 48 venant en appui axial contre la partie centrale 54 du capot 51. L'écartement des surfaces extérieures des parties centrales des lobes 47 est tel que le verrou 45 maintient de façon stable les mâchoires 31 en position écartée d'ouverture. Les tétons 50 viennent en saillie entre les bords latéraux des mâchoires 31, pour empêcher une rotation du verrou 45 par rapport aux mâchoires 31, de sorte que les lobes 47 sont alignés avec la direction d'écartement des mâchoires 31 définie par les guides 40.

Les lobes 47 et les mâchoires 31 sont en appui mutuel par des surfaces perpendiculaires à la direction de déplacement des mâchoires 31, de sorte que l'effort de sollicitation des mâchoires 31 en position fermée exercé par l'anneau élastique 30 ne provoque pas de retrait du verrou 45. Une fois enfoncé, le verrou 45 est maintenu en position, de sorte qu'un opérateur peut manipuler le dispositif de tension 2 et l'installer, même lorsque sa mobilité est réduite, comme dans le cas où il ne dispose que d'une main pour réaliser les opérations.

Le diamètre d'alésage du piston 23 est prévu pour permettre un écartement suffisant des mâchoires 31 de façon que leurs extrémités filetées n'interfèrent pas avec l'extrémité filetée 1b de la tige 1 lors de l'installation du dispositif de tension 2, facilitant ainsi l'installation du dispositif de tension 2 par un opérateur.

En l'absence de fluide sous pression dans la chambre annulaire 25, le piston 11 est maintenu en position rentrée par le ressort de rappel 56 exerçant un effort axial sur le piston 11 dirigé vers la plaque 4.

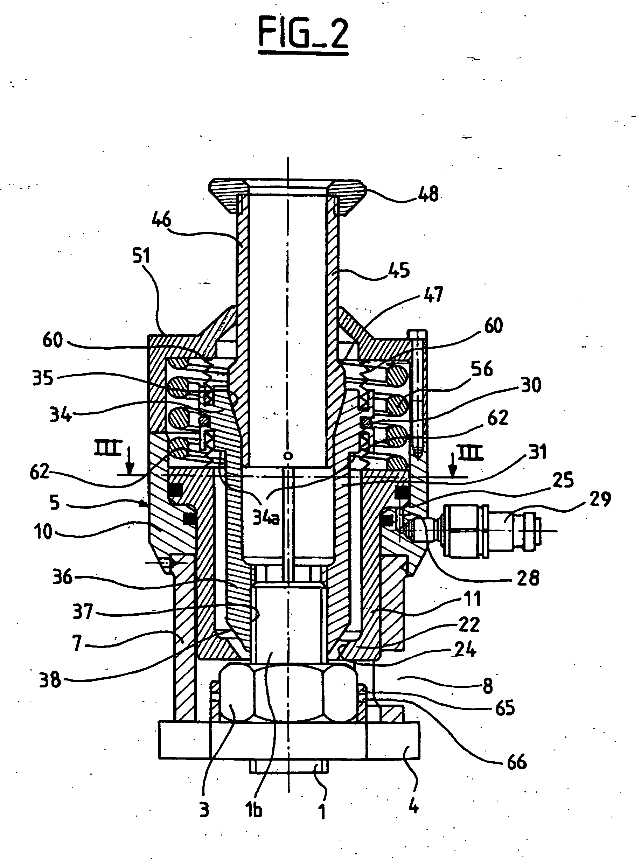

Sur la figure 2, on a représenté le dispositif de tension 2 dans une position de fermeture des mâchoires 31, sans application d'un effort axial de tension de la tige filetée 1.

Le verrou 45 est tiré axialement de façon que les portions centrales des lobes 47 soient dégagées d'entre les portions intermédiaires 32 des mâchoires 31 et n'empêchent plus le rapprochement radial de ces dernières.

Les mâchoires 31 sont sollicitées en position fermée par l'anneau élastique 30 qui tend à les rapprocher. Les mâchoires 31 se rapprochent radialement jusqu'à ce que leurs portions d'accrochage 36 munies de filets 37 viennent en prise avec les filets de l'extrémité libre 1b de la tige filetée 1. Une portion d'extrémité du manchon 46 du verrou 45 se situe entre les portions intermédiaires 32 des mâchoires 31. Le diamètre extérieur du manchon 46 est adapté pour permettre un rapprochement suffisant des mâchoires 31. La portion d'extrémité du manchon 46 améliore un guidage axial du verrou 45 lorsque l'on repositionne ce dernier en position d'ouverture des mâchoires 31.

Dans le cas où les sommets des filets de la tige 1 ne se situent pas en regard des fonds de filet des mâchoires, les ressorts de suspension 60, 62 permettent une légère adaptation de la position axiale des mâchoires 31 de façon que sous l'effet de la sollicitation radiale par l'anneau élastique 30 et des surfaces inclinées des filets, les mâchoires 31 engagent convenablement dans les filets de la tige filetée 1, assurant un coopération satisfaisante, et évitant tout risque de détérioration des filets pouvant entraîner un incident et parfois même un accident. Les mâchoires 31 se déplacent essentiellement radialement avec une possibilité de déplacement axial.

Avantageusement, les ressorts 60, 62 de suspension de tirants possèdent une extrémité logée dans un trou des portions de guidage 34 des mâchoires 31 et viennent simplement en appui sur des surfaces planes par leur extrémité opposée. De la sorte, les ressorts de suspension 60, 62 accompagnent les mâchoires 31 dans leurs mouvements radiaux. Il n'est pas nécessaire de procéder à une quelconque rotation des mâchoires 31 de l'actionneur 5.

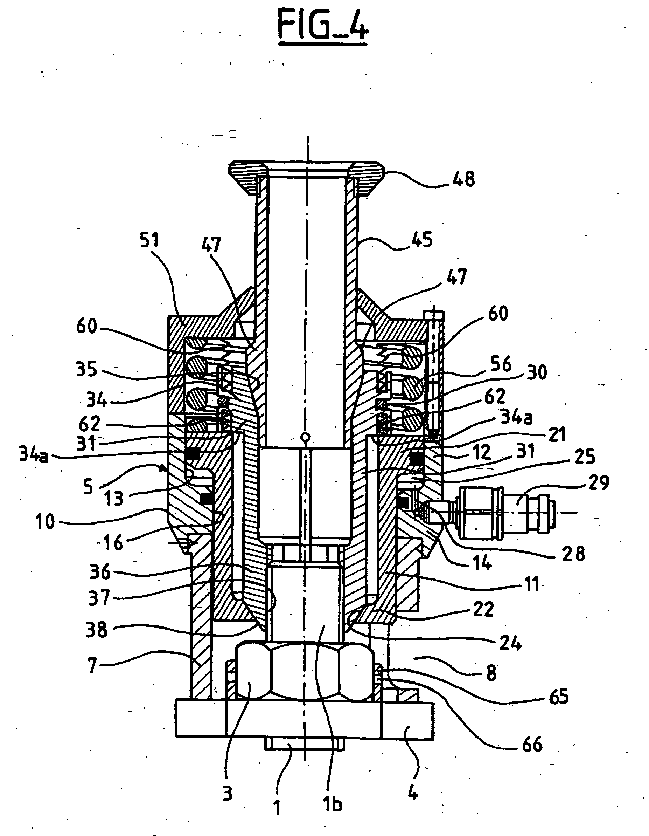

Sur la figure 4, on a représenté le dispositif de mise en tension 2 lors d'une étape d'application d'un effort de tension sur la tige filetée 1, après que les mâchoires 31 aient été fermées.

Lors d'une étape de mise en tension, la chambre 25 est alimentée en fluide sous pression par l'intermédiaire de l'amenée 28, ce qui a pour effet d'exercer un effort axial entre le cylindre 10 et le piston 11. Le piston 11 est poussé axialement le long des alésages 13, 16 de la portion axiale cylindrique 12 et de l'embase 14 du cylindre 10, du côté du cylindre 10 opposé à la jupe 7. Le ressort de rappel 56 est comprimé. Pour des raisons de clarté du dessin, le ressort de rappel 56 est représenté avec une spire de moins. L'homme de l'art comprendra aisément que, en fait, lors de la compression du ressort de rappel 56, les spires de ce dernier se rapprochent.

La portion d'accrochage 22 du piston 11 vient en contact par sa surface tronconique 24 avec la surface extérieure inclinée d'extrémité 38 des mâchoires 31. Le piston 11 agissant sur les mâchoires 31 par une surface inclinée 38 transmet aux mâchoires 31 un effort axial de traction, et un effort radial de serrage des mâchoires 31. Plus l'effort axial de traction est important, plus l'effort de serrage des mâchoires sera important. En outre, la portion d'accrochage 22 est décalée axialement par rapport à la collerette 21 du piston 11, qui est une portion de reprise des efforts de traction appliqués à l'aide de l'actionneur 5. Un effort de serrage des mâchoires 31 appliqué par la portion d'accrochage 22 décalée s'effectue directement sur la portion des mâchoires 31 en prise avec la tige 1.

Le piston 11 est déplacé axialement par rapport au tirant 6, de sorte que les ressorts de suspension 62 situés entre le piston 11 et le tirant 6 sont comprimés. Le piston 11, en coulissant légèrement par rapport aux mâchoires 31, vient en contact par sa surface d'extrémité de la collerette 21 opposée à la portion d'accrochage 22 avec l'épaulement de reprise d'effort 34a formé sur la portion de guidage 34. Les tolérances de positionnement axial d'une part, sur le piston, entre la collerette 21 et la surface tronconique 24 de la portion d'accrochage 22 et d'autre part, sur les mâchoires 31, entre l'épaulement de reprise d'effort 34a et la surface tronconique 38, sont judicieusement choisies de façon que les déformations provoquées dans le piston 11 et dans les mâchoires 31 par les efforts soient équilibrées et ne provoquent pas de contraintes excessives.

Le piston 11 comprend une collerette 21 formant une chambre annulaire 25 avec le cylindre 10, et une portion d'accrochage 22 décalée permettant d'appliquer un effort de traction au plus près de l'écrou 3. L'effort de traction est transmis par la portion d'accrochage 22 agissant sur une extrémité du tirant 6 proche axialement de l'écrou 3.La structure du piston 11 permet un passage du tirant 6 à travers le piston 11 pour venir engager avec la tige filetée 1 au plus près de l'écrou 3, évitant ainsi d'avoir à prévoir une extrémité libre 1b de la tige filetée 1 de longueur importante.

Les parties inclinées des lobes 47 du verrou 45, et la surface inclinée 35 des portions de guidage 34 des mâchoires 31 facilitent un actionnement du verrou 45 d'une position de fermeture vers une position d'ouverture. En position d'ouverture, les lobes 47 se situent hors de l'espace compris entre les portions intermédiaires 32 des mâchoires 31. En actionnant le verrou 45, les portions inclinées coopérant avec les surfaces inclinées 35 des mâchoires 31 provoquent un écartement progressif des mâchoires 31. Lorsque les parties centrales des lobes 47 sont passées entre les portions intermédiaire 32, le verrou 45 est en position stable de fermeture de mâchoires.

Le verrou 45 est également stable en position de fermeture des mâchoires 31. En effet, les surfaces inclinées 35 des portions de guidage 34 de mâchoires 31, sollicitées radialement par l'anneau élastique 30, exercent un effort axial sur les lobes 47 repoussant le verrou 45 en position de fermeture des mâchoires 31.

Lorsque l'effort de traction est appliqué sur la tige filetée 1, on agit sur la clé 64 pour accoster l'écrou 3 sur la plaque 4. Ensuite, on relâche l'effort de traction sur la tige filetée 1, qui est bloquée par l'écrou 3 en appui contre la plaque 4, ce qui maintient la précontrainte de la tige filetée 1. Ensuite, on peut enfoncer le verrou 45 pour écarter les mâchoires 31 et retirer le dispositif de tension 2.

On a décrit un tirant 6 comprenant deux mâchoires 31. Bien entendu, on pourrait prévoir un tirant divisé en un nombre plus important de mâchoires. Dans ce cas, on prévoit d'adapter le verrou de façon qu'il présente des surfaces d'écartement perpendiculaires aux directions de déplacement des mâchoires, et de moyens de guidage des mâchoires adaptés.

Lorsque plusieurs tiges doivent être serrées simultanément, on peut prévoir de rassembler une pluralité de dispositifs de tension sur une même de support, et de pourvoir l'ensemble d'un plaque de commande du verrouillage des mâchoires agissant simultanément sur l'ensemble des verrous. La plaque de commande pouvant être actionnée par tout type d'actionneur comme par exemple un vérin hydraulique, pneumatique ou électrique, ou un dispositif à électro-aimant.

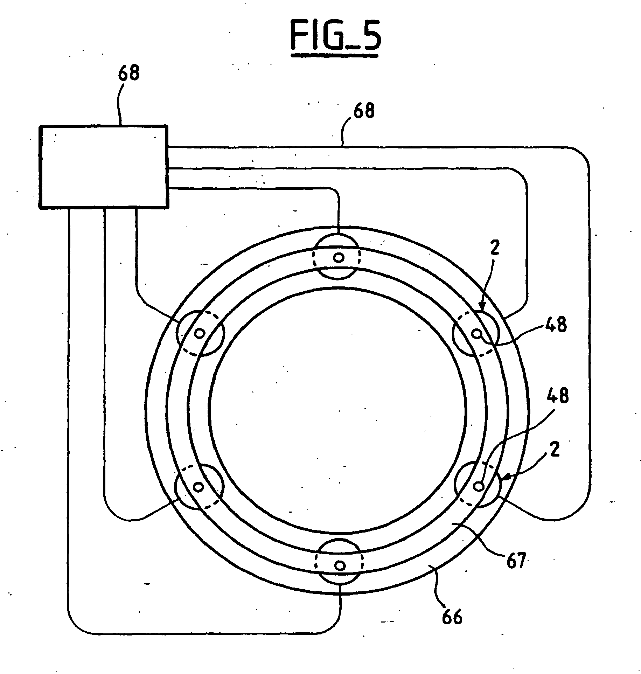

Sur la figure 5, une plaque de support annulaire 66 porte une pluralité de dispositifs de tension 2, ici au nombre de 6, répartis circonférentiellement de façon régulière, et représenté en pointillés. Les bloqueurs 48 des verrous 45 des dispositifs de tension 2 sont fixés sur une plaque annulaire de verrouillage 67, de dimensions plus réduites que la plaque de support 66. Une unité centrale hydraulique 68 est reliée par des tuyaux 69 aux dispositifs de tension 2.

Pour appliquer une tension de précontrainte sur des tiges filetées, on dispose la plaque de support 66 de façon à ce que les dispositifs de tension recouvrent les extrémités libres des tiges filetées, que l'on aura préalablement munies d'écrous d'accostage. Ensuite, on ferme simultanément les mâchoires des dispositifs de tension 2 en appuyant sur la plaque de verrouillage 67 pour enfoncer simultanément les verrous 48. Ensuite, on applique simultanément une tension sur toutes les tiges filetées en commander l'unité hydraulique 68 qui fournit un fluide sous pression simultanément dans toues les dispositifs de tension. Ensuite, on accoste les écrous d'accostage successivement sur toues les tiges filetées, puis on relâche simultanément la tension appliquée par les dispositifs de tension en commandant l'unité centrale hydraulique 68.

Dans une variante, on prévoit de tendre les tiges filetées séquentiellement en tendant des groupes de tiges réparties de façon symétrique.

Par ailleurs, bien que l'on ait décrit des plaques de supports annulaires, d'autres formes de plaques de support ou de verrouillage peuvent convenir, et seront choisi en fonction de la répartition des tiges filetées à précontraindre.

Les dispositifs de tension à mâchoires permettent d'appliquer ces derniers simultanément sur toutes les tiges filetées. Les verrous à positions stables de fermeture et d'ouverture des mâchoires permettent de commander l'ouverture ou la fermeture des mâchoires sans avoir à maintenir un effort. Ainsi, on peut facilement installer les dispositifs de tension simultanément, puis fermer ou ouvrir simultanément leurs mâchoires. De plus ; un opérateur est plus libre de ses mouvements s'il ne doit pas maintenir un effort d'ouverture ou de fermeture des mâchoires.

Grâce à l'invention, on obtient un dispositif de mise en tension de tiges filetées dont l'installation et la manipulation sont faciles. Le tirant à mâchoires permet une fixation rapide sur la tige filetée, sans opération de vissage. Le verrou, mobile entre des positions stables d'ouverture et de fermeture des mâchoires, facilite l'utilisation du dispositif par un opérateur pouvant successivement positionner le verrou en position d'ouverture, placer le dispositif de tension, puis positionner le verrou en position de fermeture, provoquant la fermeture des mâchoires par un mouvement radial et permettant d'assurer un accrochage adéquate de la tige filetée, évitant ainsi une détérioration de filets. Les mâchoires montées flottantes permettent une adaptation de leur position axiale par rapport aux filets de la tige filetée. En outre, le dispositif de tension permet d'appliquer un effort de traction sur une tige filetée présentant une extrémité libre de longueur réduite.

## Revendications

1. Dispositif de tension d'une tige filetée (1) comprenant un actionneur (5) apte à exercer un effort axial de tension, un tirant (6) de transmission de l'effort axial de tension de l'actionneur (5) vers une extrémité filetée (1b) de la tige (1), le tirant (6) comprenant au moins deux mâchoires (31) mobiles entre une position fermée dans laquelle le tirant (6) est en prise avec une extrémité filetée (1b) d'une tige (1), et une position ouverte dans laquelle les mâchoires (31) sont dégagées de la tige filetée (1), et un verrou (45) mobile entre une position stable d'ouverture des mâchoires (31) et une position stable de fermeture des mâchoires (31), **caractérisé par le fait que** le verrou comprend un manchon (46) coulissant axialement entre les mâchoires (31) et muni de surépaisseurs (47) d'écartement des mâchoires (31) sur un segment axial du manchon (46).

2. Dispositif selon la revendication 1, **caractérisé par le fait que** les surépaisseurs d'écartement du verrou (45) comprennent des surfaces d'écartement des mâchoires (31) destinées à venir en appui sur des surfaces correspondantes des mâchoires (31), lesdites surfaces d'écartement étant sensiblement perpendiculaires à une direction d'écartement des mâchoires (31).

3. Dispositif selon l'une quelconque des revendications 1 ou 2, **caractérisé par le fait que** les surépaisseurs présentent des portions centrales de blocage présentant une surface extérieure perpendiculaire à une direction d'écartement des mâchoires, et au moins une portion latérale de guidage inclinée.

4. Dispositif selon la revendication 3, **caractérisé par le fait que** les mâchoires présentent à une extrémité des surfaces intérieures inclinées (35) aptes à coopérer avec une portion latérale de guidage inclinée des surépaisseurs du verrou.

5. Dispositif selon l'une quelconque des revendications précédentes, **caractérisé par le fait que** les mâchoires (31) sont mobiles essentiellement selon une direction radiale.

6. Dispositif selon l'une quelconque des revendications précédentes, **caractérisé par le fait que** les mâchoires (31) sont sollicitées en position fermée par un élément élastique (30).

7. Dispositif selon l'une quelconque des revendications précédentes, **caractérisé par le fait que** les mâchoires (31) sont montées flottantes axialement à l'aide de ressorts (60, 62).

8. Dispositif selon l'une quelconque des revendications précédentes, **caractérisé par le fait que** l'actionneur comprend un organe mobile (11) muni d'une portion d'accrochage (22) présentant une surface inclinée (24) de contact avec les mâchoires (31), qui sont pourvue de surfaces correspondantes.

9. Dispositif selon la revendication 8, **caractérisé par le fait que** l'actionneur est du type à piston, l'organe mobile (11) comprenant une portion de reprise d'effort (21) apte à former piston dans l'actionneur.

10. Dispositif selon la revendication 9, **caractérisé par le fait que** la portion d'accrochage (22) de l'organe mobile (11) est décalée axialement par rapport à la portion de reprise d'effort (21), la portion d'accrochage (22) étant destinée à coopérer avec une portion de traction (36) des mâchoires (31) située à une extrémité des mâchoires (31).

11. Dispositif selon l'une quelconque des revendications précédentes, **caractérisé par le fait que** le tirant (6) comprend au moins un guide (40) d'écartement radial des mâchoires (31) coulissant simultanément dans des perçages ménagés dans deux mâchoires (31).

12. Ensemble de tension de tiges filetées, **caractérisé par le fait qu'**il comprend une plaque de support (66) portant au moins deux dispositifs de tension selon l'une quelconque des revendications précédentes, et une plaque de verrouillage (67) pour agir simultanément sur l'ensemble des verrous (45) des dispositifs de tension (2).

13. Procédé de mise en tension d'une tige filetée, **caractérisé par le fait que** l'on maintient des mâchoires (31) d'un tirant (6) écartées à l'aide d'un verrou (45) déplacé axialement entre les mâchoires et présentant des surépaisseurs d'écartement des mâchoires, on libère les mâchoires (31) en faisant coulisser axialement le verrou (45) de façon que les mâchoires se ferment sur une extrémité (1b) de la tige (1), puis on exerce un effort axial de tension sur la tige filetée (1) à l'aide d'un actionneur (5) agissant sur le tirant (6).

## Claims

1. Device for tensioning a threaded rod (1) comprising an actuator (5) capable of exerting an axial tensioning force, a puller (6) for transmitting the axial tensioning force from the actuator (5) toward a threaded end (1b) of the rod (1), the puller (6) comprising at least two jaws (31) which can move between a closed position in which the puller (6) is in engagement with a threaded end (1b) of a rod (1), and an open position in which the jaws (31) are disengaged from the threaded rod (1), and a locking element (45) which can move between a stable position for opening the jaws (31) and a stable position for closing the jaws (31), **characterized in that** the locking element comprises a sleeve (46) sliding axially between the jaws (31) and provided, over an axial segment of the sleeve (46), with bulges (47) for separating the jaws (31).

2. Device according to Claim 1, **characterized in that** the separating bulges of the locking element (45) comprise surfaces for separating the jaws (31) intended to bear against corresponding surfaces of the jaws (31), said separating surfaces being substantially perpendicular to a direction of separation of the jaws (31).

3. Device according to either one of Claims 1 and 2, **characterized in that** the bulges have central locking portions having an outer surface perpendicular to a direction of separation of the jaws, and at least one inclined lateral guiding portion.

4. Device according to Claim 3, **characterized in that** the jaws have, at one end, inclined inner surfaces (35) capable of cooperating with an inclined lateral guiding portion of the locking element bulges.

5. Device according to any one of the preceding claims, **characterized in that** the jaws (31) can move essentially in a radial direction.

6. Device according to any one of the preceding claims, **characterized in that** the jaws (31) are urged into the closed position by an elastic element (30).

7. Device according to any one of the preceding claims, **characterized in that** the jaws (31) are mounted in an axially floating manner with the aid of springs (60, 62).

8. Device according to any one of the preceding claims, **characterized in that** the actuator comprises a moving member (11) provided with a latching portion (22) having an inclined surface (24) for contact with the jaws (31), which are provided with corresponding surfaces.

9. Device according to Claim 8, **characterized in that** the actuator is of the piston type, the moving member (11) comprising a force take-up portion (21) capable of forming a piston in the actuator.

10. Device according to Claim 9, **characterized in that** the latching portion (22) of the moving member (11) is offset axially with respect to the force take-up portion (21), the latching portion (22) being intended to cooperate with a pulling portion (36) of the jaws (31) situated at one end of the jaws (31).

11. Device according to any one of the preceding claims, **characterized in that** the puller (6) comprises at least one guide (40) for radially separating the jaws (31) which slides simultaneously in drilled holes made in two jaws (31).

12. Assembly for tensioning threaded rods, **characterized in that** it comprises a support plate (66) bearing at least two tensioning devices according to any one of the preceding claims, and a locking plate (67) for acting simultaneously on all the locking elements (45) of the tensioning devices (2).

13. Method of tensioning a threaded rod, **characterized in that** jaws (31) of a puller (6) are kept separated with the aid of a locking element (45) displaced axially between the jaws and having bulges for separating the jaws, the jaws (31) are released by axially sliding the locking element (45) so that the jaws close over one end (1b) of the rod (1), and then an axial tensioning force is exerted on the threaded rod (1) with the aid of an actuator (5) acting on the puller (6).

## Patentansprüche

1. Spannvorrichtung für eine Gewindestange (1), die ein Betätigungselement (5), das geeignet ist, eine axiale Spannungsbeanspruchung auszuüben, einen Anker (6) für die Übertragung der axialen Spannungsbeanspruchung des Betätigungselements (5) auf ein Gewindeende (1 b) der Stange (1), wobei der Anker (6) wenigstens zwei Klauen (31) aufweist, die zwischen einer geschlossenen Stellung, in welcher der Anker (6) in Eingriff mit einem Gewindeende (1 b) einer Stange (1) ist, und einer offenen Stellung beweglich sind, in welcher die Klauen (31) aus der Gewindestange (1) ausgerückt sind, und einen Riegel (45) aufweist, der zwischen einer stabilen Offenstellung der Klauen (31) und einer stabilen Geschlossenstellung der Klauen (31) beweglich ist, **dadurch gekennzeichnet, dass** der Riegel eine Hülse (46) aufweist, die axial zwischen den Klauen (31) verschiebbar und mit Verdickungen (47) für die Spreizung der Klauen (31) auf einem Axialsegment der Hülse (46) versehen ist.

2. Vorrichtung nach Anspruch 1, **dadurch gekennzeichnet, dass** die Spreizverdickungen der Hülse (45) zum Spreizen der Klauen (31) Flächen aufweisen, die dazu bestimmt sind, in Anlage an korrespondierende Flächen der Klauen (31) zu gelangen, wobei die Flächen der Verdickung im Wesentlichen senkrecht zu einer Spreizrichtung der Klauen (31) liegen.

3. Vorrichtung nach Anspruch 1 oder 2, **dadurch gekennzeichnet, dass** die Verdickungen zentrale Verriegelungsbereiche aufweisen, die eine Außenfläche senkrecht zu einer Spreizrichtung der Klauen besitzt, und wenigstens einen geneigten seitlichen Führungsbereich aufweisen.

4. Vorrichtung nach Anspruch 3, **dadurch gekennzeichnet, dass** die Klauen an einem Ende geneigte Innenflächen (35) aufweisen, die zum Zusammenwirken mit geneigten seitlichen Führungsflächen der Verdickungen des Riegels geeignet sind.

5. Vorrichtung nach einem der vorhergehenden Ansprüche, **dadurch gekennzeichnet, dass** die Klauen (31) im Wesentlichen nur in einer Radialrichtung beweglich sind.

6. Vorrichtung nach einem der vorhergehenden Ansprüche, **dadurch gekennzeichnet, dass** die Klauen (31) durch ein elastisches Element (30) in der geschlossenen Stellung vorbelastet sind.

7. Vorrichtung nach einem der vorhergehenden Ansprüche, **dadurch gekennzeichnet, dass** die Klauen (31) axial schwimmend mit Hilfe von Federn (60,62) montiert sind.

8. Vorrichtung nach einem der vorhergehenden Ansprüchen, **dadurch gekennzeichnet, dass** das Betätigungselement ein mobiles Organ (11) aufweist, das mit einem Mitnehmerbereich (22) versehen ist, der eine geneigte Fläche (24) für den Kontakt mit den Klauen (31) aufweist, die mit korrespondierenden Flächen versehen sind.

9. Vorrichtung nach Anspruch 8, **dadurch gekennzeichnet, dass** das Betätigungselement von der Art eines Kolbens ist, wobei das mobile Organ (11) einen Aufnahmebereich (21) der Beanspruchung aufweist, der geeignet ist, einen Kolben in dem Betätigungselement zu bilden.

10. Vorrichtung nach Anspruch 9, **dadurch gekennzeichnet, dass** der Mitnahmebereich (22) des beweglichen Organs (11) in Bezug auf den Aufnahmebereich (21) der Beanspruchung axial versetzt liegt, wobei der Mitnahmebereich (22) zum Zusammenwirken mit einem Zugbereich (36) der Klauen (31) bestimmt ist, der an einem Ende der Klauen (31) liegt.

11. Vorrichtung nach einem der vorhergehenden Ansprüche, **dadurch gekennzeichnet, dass** der Anker (6) wenigstens eine Führung (40) für die Radialspreizung der Klauen (31) aufweist, der gleichzeitig in Bohrungen gleitet, die in den beiden Klauen (31) angeordnet sind.

12. Spannsystem für Gewindestangen, **dadurch gekennzeichnet, dass** es eine Stützplatte (66), die wenigstens zwei Spannvorrichtungen nach einem der vorhergehenden Ansprüche trägt, und eine Verriegelungsplatte (67) aufweist, um gleichzeitig auf die Anordnung von Riegeln (45) der Spannvorrichtung (2) einzuwirken.

13. Verfahren zur Aufbringung von Spannung auf Gewindestangen, **gekennzeichnet dadurch, dass** man die Klauen (31) eines Ankers (6), die mit der Hilfe eines Riegels (45), der axial zwischen den Klauen verlagert ist und Verdickungen zum Spreizen der Klauen aufweist, gespreizt hält, die Klauen (31) durch Bewerkstelligen eines axialen Verschiebens des Riegels (45) in einer Weise freigibt, dass die Klauen sich an einem Ende (1b) der Stange (1) schließen, und dann eine axiale Spannungsbeanspruchung mit Hilfe eines Betätigungselements (5), das auf den Anker (6) wirkt, auf die Gewindestange (1) ausübt.
